# EUROPÄISCHE PATENTANMELDUNG

(11) **EP 1 936 213 A2**
(43) Veröffentlichungstag der Anmeldung: **25.06.2008**
(21) Anmeldenummer: 07122633.6
(22) Anmeldetag: 07.12.2007
(51) Int. Cl.: F16B 33/02, F16B 25/00

(54) **Befestigungselement**

(30) Priorität: 19.12.2006 DE 102006000539
(71) Anmelder: HILTI Aktiengesellschaft, 9494 Schaan (LI)
(72) Erfinder: Gstach, Peter, 9494 Schaan (LI)
(74) Vertreter: Wildi, Roland

(57) **Zusammenfassung**

Ein Befestigungselement (11) für mineralische Untergründe weist einen Schaft (12) mit einem sich bereichsweise entlang des Schafts (12) erstreckenden, gewindefurchenden Gewinde (21) mit seitlichen Flanken (23, 24) sowie mit einem Drehangriffsmittel für ein Setzwerkzeug auf. Der Winkel (W) der Flanken (23, 24) beträgt 10° bis 35°, das Verhältnis des Aussendurchmessers (A) des Gewindes (21) zu dem Kerndurchmesser (K) des Schafts (12) beträgt 1.1 bis 1.4 und das Verhältnis des Aussendurchmessers (A) des Gewindes (21; 41) zu der Steigung (P) des Gewindes (21) beträgt 1.4 bis 1.7.

## Beschreibung

Die Erfindung betrifft ein Befestigungselement für mineralische Untergründe mit einem Schaft, der ein sich zumindest bereichsweise entlang des Schafts erstreckendes, gewindefurchendes Gewinde sowie ein Drehangriffsmittel für ein Setzwerkzeug aufweist.

Derartige Befestigungselemente werden in zuvor in den mineralischen Untergrund, wie z. B. in Beton oder Mauerwerk, erstellte Bohrlöcher eingeschraubt, wobei das selbstfurchende Gewinde sich in die Bohrlochwandung einschneidet und das Befestigungselement über den geschaffenen Hinterschnitt im Bohrloch zur Übertragung von Lasten verankert. Das Befestigungselement ist beispielsweise als eine Schraube mit einem Sechskantkopf oder einem Vierkant als Drehangriffsmittel an einem Ende des Schafts ausgebildet. Alternativ ist das Befestigungselement z. B. eine Innengewindehülse mit einem innenliegenden Drehangriffsmittel, die an ihrer Aussenseite das gewindefurchende Gewinde aufweist.

Aus der EP 0 697 071 B1 ist eine gewindeformende Schraube als Befestigungselement für mineralische Untergründe mit einem Schaft bekannt, der ein sich bereichsweise entlang des Schafts erstreckendes, gewindefurchendes Gewinde sowie ein Drehangriffsmittel für ein Setzwerkzeug aufweist. Der Winkel der Flanken des Gewindes beträgt 35° bis 50°, das Verhältnis des Aussendurchmessers des Gewindes zu dem Kerndurchmesser des Schafts beträgt 1.25 bis 1.5 und das Verhältnis des Aussendurchmessers des Gewindes zu der Steigung des Gewindes beträgt 1.5 bis 1.6.

Für ein optimales Tragverhalten derartiger Befestigungselemente sind die Grösse und die Qualität der von dem selbstfurchenden Gewinde erzeugten Hinterschnittfläche im Untergrund von wesentlicher Bedeutung. Nachteilig an der bekannten Lösung ist, dass die Schraube gemäss der EP 0 697 071 B1 mit deren Verhältnissen den Untergrund beim Furchen des Gewindes schädigen kann und dadurch das Tragverhalten der gesetzten Schraube massgeblich reduziert wird.

Aufgabe der Erfindung ist es, ein gewindefurchendes Befestigungselement für mineralische Untergründe zu schaffen, das ein vorteilhaftes Trag- und Setzverhalten aufweist.

Die Aufgabe ist durch die Merkmale des unabhängigen Anspruchs gelöst. Vorteilhafte Weiterbildungen sind in den Unteransprüchen dargelegt.

Gemäss der Erfindung beträgt der Winkel der Flanken des Gewindes 10° bis 35°, das Verhältnis des Aussendurchmessers des Gewindes zu dem Kerndurchmesser des Schafts 1.1 bis 1.4 und das Verhältnis des Aussendurchmessers des Gewindes zu der Steigung des Gewindes 1.4 bis 1.7.

Mit den schmalen Gewindeflanken sowie den angegebenen Verhältnissen schneidet sich das Gewinde beim Setzen besser in den Untergrund ein und die erzeugte Hinterschnittfläche im Untergrund entspricht im Wesentlichen der Negativform des Gewindes. Bei gleicher Hinterschnitttiefe wird weniger Hinterschnittvolumen im Untergrund erzeugt und der mineralische Untergrund wesentlich geringer geschädigt, als dies bei bisher bekannten gewindefurchenden Befestigungselementen der Fall ist.

Da weniger Hinterschnittvolumen im Untergrund erzeugt wird, ist der Eindrehwiderstand für das erfindungsgemässe Befestigungselement reduziert. Zudem wird beim Setzen des Befestigungselementes weniger Bohrmehl erzeugt. Insgesamt führt dies dazu, dass das Befestigungselement nicht nur ein verbessertes Tragverhalten sondern auch ein wesentlich verbessertes Setzverhalten aufweist.

Vorzugsweise ist die Breite des Gewindes am äusseren Umfang kleiner als 0.5 mm. Besonders vorteilhaft ist diese Breite kleiner als 0.30 mm. Insbesondere in der Kombination mit dem Winkel der Flanken des Gewindes bildet sich die in den Untergrund gefurchte Negativform in vorteilhafter Weise aus, so dass diese im Wesentlichen dem Gewinde angepasst ist. Der Untergrund wird deutlich weniger geschädigt, als bei einem Befestigungselement mit einem gedrungenen Gewindeprofil.

Bevorzugt weist das Gewinde nach radial aussen offene, zueinander beabstandete Ausnehmungen auf. Die Ausnehmungen sind beispielsweise rechteckige oder dreieckige Kerben, welche so genannte Schneidzähne für das Gewinde ausbilden und das Furchen im Untergrund vorteilhaft unterstützen.

Vorzugsweise weist der Schaft an einem Ende einen Einführabschnitt auf, wobei sich das Gewinde von einem Bereich des Endes ausgehend erstreckt und die Ausnehmungen im Bereich des Endes am Gewinde vorgesehen sind. Durch die Ausnehmungen wird zu Beginn des Setzvorgangs das Furchen vorteilhaft unterstützt, wobei die Bereiche des Gewindes ohne Ausnehmungen in das vorgefurchte Gegengewinde eindringen.

Bevorzugt sind die Flanken des Gewindes divergierend ausgebildet und weisen jeweils zumindest zwei Flankenabschnitte auf, wobei die radial äusseren Flankenabschnitte den Winkel von 10° bis 35° aufweisen und die zumindest einen dem Gewindegrund zugewandten Flankenabschnitte zumindest einen weiteren Winkel einschliessen, der grösser als der Winkel der radial äusseren Flankenabschnitte ist. Das Gewinde weist somit zumindest zwei Winkel unter zunehmender Divergenz zum Gewindegrund mit unterschiedlichen Winkelbeträgen auf, wobei der Winkel der äusseren Flankenabschnitte des Gewindes den vorteilhaften Bereich umfasst. Die Höhe des äusseren, von den radial äusseren Flankenabschnitten gebildeten Gewindeabschnitts ist vorteilhaft derart gewählt, dass dieser Gewindeabschnitt den hauptsächlichen Teil des Hinterschnitts im Untergrund ausbildet. Der sich an den äusseren Gewindeabschnitt anschliessende Gewindeabschnitt, der einen grösseren Winkel der entsprechenden Flankenabschnitte zueinander aufweist, verpresst vorteilhaft den Rand des gefurchten Gegengewindes im Untergrund und gleicht allfällige Materialausbrüche aus. Vorteilhaft weist das Gewinde zwei Gewindeabschnitte auf, wobei der innere Gewindeabschnitt zwischen dem äusseren Gewindeabschnitt und dem Gewindegrund einen Winkel der Flankenabschnitte von 50° bis 150° aufweist.

Die Erfindung wird nachstehend anhand von Ausführungsbeispielen näher erläutert. Es zeigen:
- Fig. 1: Eine gewindefurchende Schraube in Seitenansicht;
- Fig. 2: eine Detailansicht des vorderen Endes in vergrösserter Darstellung;
- Fig. 3: ein schematischer Schnitt durch eine Gewindeflanke; und
- Fig. 4: einen schematischen Schnitt durch ein weiteres Beispiel einer Gewindeflanke.

Grundsätzlich sind in den Figuren gleiche Teile mit den gleichen Bezugszeichen versehen.

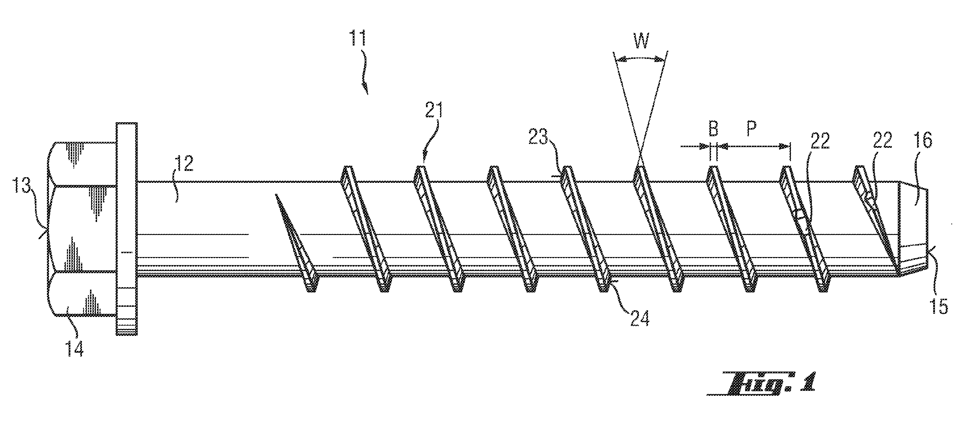

Das in den Figuren 1 bis 3 dargestellte Befestigungselement 11 für mineralische Untergründe ist eine selbstfurchende Schraube mit einem zylindrischen Schaft 12. Der Schaft 12 weist an einem ersten Ende 13 einen Sechskantkopf als Drehangriffsmittel 14 für ein hier nicht dargestelltes Setzwerkzeug und an einem zweiten Ende 15 einen Einführabschnitt 16 auf. Ausgehend von einem Bereich des zweiten Endes 15 erstreckt sich bereichsweise entlang des Schafts 12 ein gewindefurchendes Gewinde 21. Im Bereich des zweiten Endes 16 sind am Gewinde 21 nach radial aussen offene, zueinander beabstandete, dreieckförmige Ausnehmungen 22 vorgesehen.

Der Winkel W der Flanken 23 und 24 des Gewindes 21 beträgt 30°, das Verhältnis des Aussendurchmessers A des Gewindes zu dem Kerndurchmesser K des Schafts 12 beträgt 1.3 und das Verhältnis des Aussendurchmessers A des Gewindes 21 zu der Steigung P des Gewindes 21 beträgt 1.55. Die Breite B des Gewindes 21 am äusseren Umfang beträgt 0.30 mm.

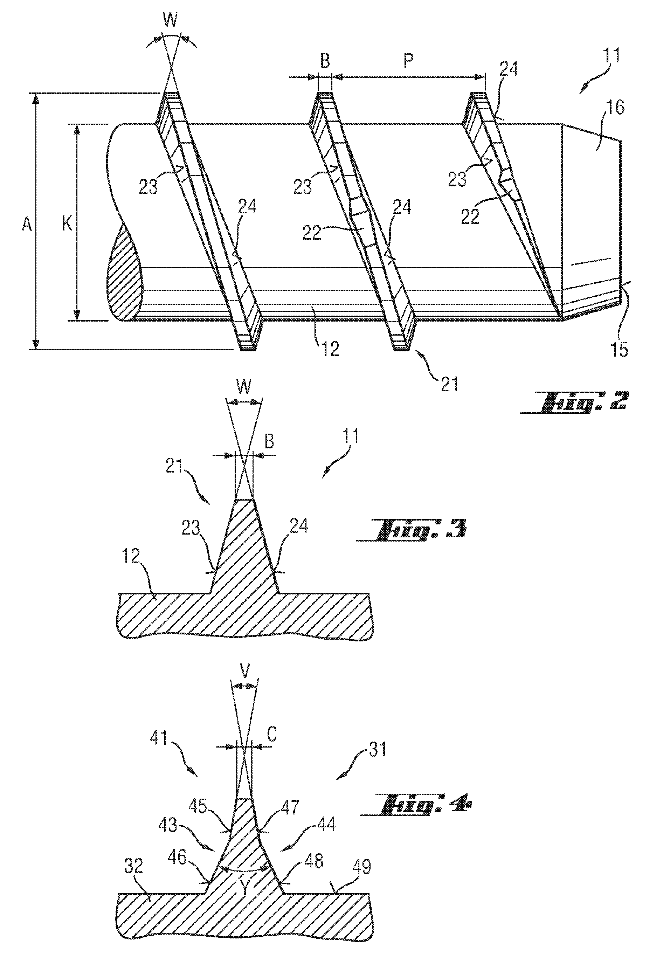

In der Figur 4 ist schematisch eine weitere Ausgestaltung eines Gewindes 41 eines Befestigungselementes 31 dargestellt. Die Flanken 43 und 44 des Gewindes 41 sind divergierend ausgebildet und weisen jeweils zwei Flankenabschnitte 45, 46 und 47, 48 auf. Die radial äusseren Flankenabschnitte 45, 47 weisen einen Winkel V von 20° auf und die dem Gewindegrund 49 zugewandten Flankenabschnitte 46, 48 schliessen einen weiteren Winkel Y von 60° ein. Das Gewinde 41 weist eine zunehmende Divergenz zum Gewindegrund 49 am Schaft 32 mit unterschiedlichen Winkelbeträgen auf. Die Breite C des Gewindes 41 am äusseren Umfang beträgt 0.25 mm. Ansonsten weist das Befestigungselement 31 die gleichen Verhältnisse bezüglich des Aussenduchmessers des Gewindes 41 sowie dessen Steigung jeweils zu dem Kerndurchmesser des Schafts 32 wie das Befestigungselement 11

## Patentansprüche

1. Befestigungselement für mineralische Untergründe mit einem Schaft (12; 32), der ein sich zumindest bereichsweise entlang des Schafts (12; 32) erstreckendes, gewindefurchendes Gewinde (21; 41) mit seitlichen Flanken (23, 24; 45, 47) sowie ein Drehangriffsmittel (14) für ein Setzwerkzeug aufweist, **dadurch gekennzeichnet, dass**
der Winkel (W; V) der Flanken (23, 24; 45, 47) 10° bis 35°,
das Verhältnis des Aussendurchmessers (A) des Gewindes (21; 41) zu dem Kerndurchmesser (K) des Schafts (12; 32) 1.1 bis 1.4 und
das Verhältnis des Aussendurchmessers (A) des Gewindes (21; 41) zu der Steigung (P) des Gewindes (21; 41) 1.4 bis 1.7 beträgt.

2. Befestigungselement nach Anspruch 1, **dadurch gekennzeichnet, dass** die Breite (B; C) des Gewindes (21; 41) am äusseren Umfang kleiner als 0.5 mm ist.

3. Befestigungselement nach Anspruch 1 oder 2, **dadurch gekennzeichnet, dass** das Gewinde (21) nach radial aussen offene, zueinander beabstandete Ausnehmungen (22) aufweist.

4. Befestigungselement nach Anspruch 3, **dadurch gekennzeichnet, dass** der Schaft (12; 32) an einem Ende (15) einen Einführabschnitt (16) aufweist, wobei sich das Gewinde (21) von einem Bereich des Endes (15) ausgehend erstreckt und die Ausnehmungen (22) im Bereich des Endes (15) am Gewinde (21) vorgesehen sind.

5. Befestigungselement nach einem der Ansprüche 1 bis 4, **dadurch gekennzeichnet, dass** die Flanken (43, 44) des Gewindes (41) divergierend ausgebildet sind und jeweils zumindest zwei Flankenabschnitte (45, 46, 47, 48) aufweisen, wobei die radial äusseren Flankenabschnitte (45, 47) den Winkel (V) von 10° bis 35° aufweisen und die zumindest einen dem Gewindegrund (49) zugewandten Flankenabschnitte (46, 48) zumindest einen weiteren Winkel (Y) einschliessen, der grösser als der Winkel (V) der radial äusseren Flankenabschnitte (45, 47) ist.
